# EUROPEAN PATENT APPLICATION

(11) **EP 4 398 369 A1**
(43) Date of publication of application: **10.07.2024**
(21) Application number: 22941024.6
(22) Date of filing: 09.05.2022
(51) Int. Cl.: H01M 10/058, H01M 10/04, H01M 50/167

(54) **DEVICE AND METHOD FOR PREPARING BATTERY CELL**

(71) Applicant: Contemporary Amperex Technology Co., Limited, Ningde, Fujian 352100 (CN)
(72) Inventor: PAN, Youcheng, Ningde, Fujian 352100 (CN); JIANG, Liang, Ningde, Fujian 352100 (CN); LUO, Zhixin, Ningde, Fujian 352100 (CN)
(74) Representative: Frick, Robert
(86) International application number: PCT/CN2022/091669
(87) International publication number: WO 2023/216056

(57) **Abstract**

Embodiments of the present application provide a device and method for producing a battery cell. The device includes: an upsetting mechanism and a moving mechanism, where the moving mechanism is configured to: control the upsetting mechanism to move towards the battery cell along a direction of a central axis of the battery cell, and the battery cell includes a housing and a cover plate, and the housing and the cover plate are connected in a sealing manner and formed with a crimping structure turned outwards; and a surface of the upsetting mechanism facing the crimping structure is provided with at least one protruding structure, and the protruding structure is configured to press the crimping structure towards the direction of the central axis of the battery cell when the moving mechanism controls the upsetting mechanism to move towards the battery cell, so that the crimping structure is inclined towards a direction close to the central axis of the battery cell. The device and method for producing the battery cell in the embodiments of the present application could improve processing efficiency of the battery cell, and improve security of the battery cell.

## Description

### TECHNICAL FIELD

The present application relates to the field of battery technology, in particular to a device and method for producing a battery cell.

### BACKGROUND

Energy saving and emission reduction is the key to sustainable development of the automobile industry. Under such circumstance, electric vehicles have become an important component of the sustainable development of the automobile industry due to advantages in energy saving and environmental protection. For the electric vehicles, battery technology is also an important factor for their development.

In the development of the battery technology, in addition to improvement in performance of a battery, safety is also an issue that cannot be ignored. If the safety of the battery cannot be guaranteed, the battery cannot be used. Therefore, how to enhance the safety of the battery while ensuring processing efficiency of the battery is a technical problem to be urgently solved in the battery technology.

### SUMMARY

Embodiments of the present application provide a device and method for producing a battery cell, which could improve processing efficiency of the battery cell and improve safety of the battery cell.

In a first aspect, there is provided a device for producing a battery cell, and the device includes: an upsetting mechanism and a moving mechanism, where the moving mechanism is configured to: control the upsetting mechanism to move towards the battery cell along a direction of a central axis of the battery cell, and the battery cell includes a housing and a cover plate, and the housing and the cover plate are connected in a sealing manner and formed with a crimping structure turned outwards; and a surface of the upsetting mechanism facing the crimping structure is provided with at least one protruding structure, and the protruding structure is configured to press the crimping structure towards the direction of the central axis of the battery cell when the moving mechanism controls the upsetting mechanism to move towards the battery cell, so that the crimping structure is inclined towards a direction close to the central axis of the battery cell.

Therefore, in the device provided in the embodiment of the present application, the protruding structure included in the upsetting mechanism can press the crimping structure of the battery cell towards the direction of the central axis of the battery cell when the moving mechanism controls the upsetting mechanism to move towards the battery cell along the direction of the central axis of the battery cell, so that the crimping structure is inclined towards the direction close to the central axis of the battery cell. By means of the protruding structure disposed on the upsetting mechanism, the crimping structure can be compacted, and sealing effect of the crimping structure is improved.

In some embodiments, the battery cell further includes a reinforcing member, and the reinforcing member is disposed at a side of the cover plate away from an interior of the battery cell; and the upsetting mechanism is configured to press the crimping structure, so that the crimping structure is inclined towards the direction close to the central axis of the battery cell, and at least part of the reinforcing member is located between an inner side of the crimping structure and the cover plate.

The crimping structure is pressed towards the reinforcing member, so that at least part of the reinforcing member is accommodated between the crimping structure and the cover plate, and as a result, when the interior of the battery cell expands and pressure on the cover plate is caused to increase, the reinforcing member can resist at least part of the pressure, thereby reducing the pressure directly acting on the crimping structure, and thus increasing compressive performance of the crimping structure, so as to improve safety performance of the battery cell while improving processing efficiency of the battery cell.

In some embodiments, the device further includes: a rotating mechanism configured to control the upsetting mechanism to rotate about the central axis of the battery cell. Given that the crimping structure between the housing and the cover plate surrounds the battery cell, the upsetting mechanism can be controlled to rotate about the central axis of the battery cell through the rotating mechanism 33, so that the protruding structure of the upsetting mechanism can be in contact with different areas of the crimping structure.

In some embodiments, a central axis of the upsetting mechanism overlaps with the central axis of the battery cell. In order to make all of different areas of the crimping structure pressed by the protruding structure to achieve the effect of uniform deformation, rotation of the upsetting mechanism can be controlled by the rotating mechanism, so that the protruding structure can press different areas of the ring-shaped crimping structure, and the crimping structure is more evenly stressed, and more uniformly deformed.

In some embodiments, the rotating mechanism is configured to control the upsetting mechanism to rotate about the central axis of the battery cell when the moving mechanism controls the upsetting mechanism to move towards the battery cell, which can accelerate processing speed, and improve processing efficiency.

In some embodiments, the upsetting mechanism is in a hollow structure with an opening, and the hollow structure is used to accommodate the crimping structure. The hollow structure included in the upsetting mechanism can be used to accommodate the crimping structure, that is, the hollow structure can limit the crimping structure of the battery cell in the interior of the upsetting mechanism, which limits the moving space of the crimping structure, so as to facilitate the fixing and processing of the crimping structure through the upsetting mechanism.

In some embodiments, the at least one protruding structure is disposed on an inner side surface of the upsetting mechanism, and the inner side surface of the upsetting mechanism is adjacent to the opening. As a result, the moving mechanism can control the relative movement between the upsetting mechanism and the battery cell, so that the crimping structure of the battery cell enters the hollow structure of the upsetting mechanism from the opening, so as to facilitate the protruding structure disposed on the inner side surface of the upsetting mechanism to press the crimping structure.

In some embodiments, the moving mechanism is configured to: control the upsetting mechanism to gradually approach the battery cell along the direction of the central axis of the battery cell, so that the battery cell enters the hollow structure from the opening, which facilitates the protruding structure disposed on the inner side surface of the upsetting mechanism to gradually press the crimping structure.

In some embodiments, a height of the protruding structure protruding from the inner side surface of the upsetting mechanism gradually increases from an end of the protruding structure close to the opening to an end away from the opening.

As the crimping structure of the battery cell gradually enters the hollow structure of the upsetting mechanism from the opening, the height of the protruding structure protruding from the inner side surface of the upsetting mechanism gradually increases, which can make the crimping structure gradually pressed to increase the tightness of the crimping structure, and the crimping structure gradually bent towards the central axis of the battery cell, so that at least part of the reinforcing member can be gradually accommodated and fixed between the crimping structure and the cover plate.

In some embodiments, a value range of an included angle between a surface of the protruding structure facing the crimping structure and the central axis of the battery cell is [30°, 90°], so as to prevent performance of the crimping structure from being affected when the included angle is too small.

In some embodiments, the at least one protruding structure is disposed on a partial area of an inner side surface of the upsetting mechanism.

Compared with the method of setting the protruding structure around the entire area, the method of setting the protruding structure in the local area combined with the rotation of the upsetting mechanism is not only convenient for processing, but also can make the crimping structure stressed more uniformly. The crimping structure is only partially in contact with the protruding structure at each moment, and the crimping structure gradually deforms, and the deformation is more uniform, which can improve the processing efficiency and ensure the pressing force of the protruding structure on the crimping structure is not too large, and avoid deformation of the housing of the battery cell.

In some embodiments, an inner side surface of the upsetting mechanism is provided with a plurality of uniformly distributed protruding structures.

On the one hand, by setting the plurality of protruding structures, processing speed can be increased, and a pressing process of the crimping structure can be accelerated. On the other hand, the plurality of protruding structures are uniformly distributed, which can ensure that the crimping structure is evenly stressed, and more uniformly deformed, thereby ensuring that the crimping structure has a uniform structural strength.

In some embodiments, the upsetting mechanism includes two oppositely disposed protruding structures. Given the limited size of the battery cell, setting up two protruding structures is not only convenient for the processing of the upsetting mechanism, but also can accelerate the pressing process of the crimping structure, and thus ensure that the crimping structure is evenly stressed and uniformly deformed.

In some embodiments, the battery cell is a cylinder, and an inner side surface of the upsetting mechanism is a cylindrical surface. That is, the upsetting mechanism has a cylindrical hollow structure to be used to accommodate the crimping structure of the cylindrical battery cell.

In a second aspect, there is provided a method for producing a battery cell, where the battery cell includes a housing, a cover plate, and a reinforcing member, the housing and the cover plate are connected in a sealing manner and formed with a crimping structure turned outwards, and the reinforcing member is disposed at a side of the cover plate away from an interior of the battery cell, and the method includes: controlling the upsetting mechanism to move towards the battery cell along a direction of a central axis of the battery cell, and pressing the crimping structure towards the direction of the central axis of the battery cell through at least one protruding structure disposed on a surface of the upsetting mechanism facing the crimping structure, so that at least part of the reinforcing member is located between an inner side of the crimping structure and the cover plate.

In some embodiments, the method further includes: controlling the upsetting mechanism to rotate about the central axis of the battery cell.

In some embodiments, a central axis of the upsetting mechanism overlaps with the central axis of the battery cell.

In some embodiments, the controlling the upsetting mechanism to rotate about the central axis of the battery cell includes: controlling the upsetting mechanism to rotate about the central axis of the battery cell at the time of controlling the upsetting mechanism to move towards the battery cell.

In some embodiments, the upsetting mechanism is in a hollow structure with an opening, and the hollow structure is used to accommodate the crimping structure.

In some embodiments, the controlling the upsetting mechanism to move towards the battery cell along a direction of a central axis of the battery cell includes: controlling the upsetting mechanism to gradually approach the battery cell along the direction of the central axis of the battery cell, so that the battery cell enters the hollow structure from the opening.

In some embodiments, the battery cell is a cylinder, and the hollow structure is a cylinder.

### BRIEF DESCRIPTION OF THE DRAWINGS

FIG. 1 is a schematic structural diagram of a vehicle disclosed in an embodiment of the present application;
FIG. 2 is a schematic side view of a battery cell disclosed in an embodiment of the present application;
FIG. 3 is a schematic cross-sectional view of a battery cell disclosed in an embodiment of the present application;
FIG. 4 is a schematic block diagram of a device for producing a battery cell disclosed in an embodiment of the present application;
FIG. 5 is a schematic block diagram of another device for producing a battery cell disclosed in an embodiment of the present application;
FIG. 6 is a schematic structural diagram of an upsetting mechanism disclosed in an embodiment of the present application;
FIG. 7 is a schematic top view of an upsetting mechanism disclosed in an embodiment of the present application;
FIG. 8 is a schematic cross-sectional view of an upsetting mechanism disclosed in an embodiment of the present application;
FIG. 9 is another schematic cross-sectional view of an upsetting mechanism disclosed in an embodiment of the present application;
FIG. 10 is a schematic diagram of a section in a case that a battery cell is processed by an upsetting mechanism disclosed in an embodiment of the present application;
FIG. 11 is another schematic diagram of a section in a case that a battery cell is processed by an upsetting mechanism disclosed in an embodiment of the present application;
FIG. 12 is yet another schematic diagram of a section in a case that a battery cell is processed by an upsetting mechanism disclosed in an embodiment of the present application;
FIG. 13 is a schematic partial cross-sectional view of a battery cell disclosed in an embodiment of the present application; and
FIG. 14 is a schematic flowchart of a method for producing a battery cell disclosed in an embodiment of the present application.

In the accompanying drawings, the accompanying drawings are not drawn to actual scale.

### DESCRIPTION OF EMBODIMENTS

Embodiments of the present application will be further described in detail below in conjunction with the accompanying drawings and the embodiments. The following detailed description of the embodiments and the accompanying drawings are used to illustrate the principles of the present application in examples, but not to limit the scope of the present application, that is, the present application is not limited to the described embodiments.

In the description of the present application, it should be noted that the phrase "a plurality of" means two or more, unless otherwise specified. Orientations or positional relationships indicated by terms "upper", "lower", "left", "right", "inner", "outer", or the like are only for the convenience of describing the present application and simplifying the description, and do not indicate or imply that an apparatus or element referred to must have a specific orientation, be constructed and operated in a specific orientation, and therefore cannot be understood as limitations to the present application. In addition, terms such as "first", "second" and "third" are only used for descriptive purposes, and should not be understood as indicating or implying relative importance. "Vertical" is not vertical in a strict sense, but within an allowable range of error. "Parallel" is not parallel in a strict sense, but within an allowable range of error.

Orientation words appearing in the following description are all directions shown in the drawings, and are not intended to limit the specific structure of the present application. In the description of the present application, it should be further noted that unless otherwise explicitly specified and defined, terms such as "installation", "interconnection", and "connection" should be interpreted in a broad sense, for example, it may be a fixed connection, or a detachable connection, or an integrated connection; or it may be a direct connection, or an indirect connection through an intermediate medium. Those of ordinary skill in the art can understand the specific meanings of the above terms in the present application according to specific situations.

In the embodiments of the present application, the same reference signs represent the same components, and for the sake of brevity, detailed descriptions of the same components are omitted in different embodiments. It should be understood that the thickness, length, width and other dimensions of the various components, as well as the overall thickness, length, width and other dimensions of the integrated device in the embodiments of the present application shown in the drawings are for illustrative purposes only, and should not constitute any limitation to the present application.

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited in the embodiment of the present application. The battery cell may be cylindrical, flat, cuboid or in another shape, which is not limited in the embodiment of the present application either. The battery cell is generally divided into three types according to packaging methods: a cylindrical battery cell, a square battery cell and a pouch battery cell, which is not limited in the embodiment of the present application either.

The battery mentioned in the embodiment of the present application refers to a single physical module that includes one or more battery cells to provide a higher voltage and capacity. For example, the battery mentioned in the present application may include a battery module, a battery pack, and the like. The battery generally includes a box for enclosing one or more battery cells. The box can prevent liquid or other foreign matters from affecting the charging or discharging of a battery cell.

The battery cell includes an electrode assembly and an electrolytic solution, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and a positive electrode current collector not coated with the positive electrode active material layer protrudes from the positive electrode current collector coated with the positive electrode active material layer and is used as a positive tab. As an example, in a lithium-ion battery, the material of the positive electrode current collector may be aluminum, and the positive electrode active material may be lithium cobalt oxide, lithium iron phosphate, ternary lithium or lithium manganate, etc. The negative electrode sheet includes a negative electrode current collector and a negative electrode active material layer. The negative electrode active material layer is coated on a surface of the negative electrode current collector, and a negative electrode current collector not coated with the negative electrode active material layer protrudes from the negative electrode current collector coated with the negative electrode active material layer and is used as a negative tab. The material of the negative electrode current collector may be copper, and the negative electrode active material may be carbon or silicon, etc. In order to ensure that no fusing occurs when large current passes, the number of positive tabs is multiple and the multiple positive tabs are stacked together, and the number of negative tabs is multiple and the multiple negative tabs are stacked together. The material of the separator may be polypropylene (polypropylene, PP), polyethylene (polyethylene, PE), or the like. In addition, the electrode assembly may be in a winding structure or a laminated structure, and the embodiments of the present application are not limited thereto.

With the development of battery technology, it is necessary to consider many aspects of design factors, such as energy density, cycle life, discharge capacity, C-rate and other performance parameters. In addition, processing efficiency and safety of a battery should also be considered. For the battery, the main safety hazard comes from a charging and discharging process. For example, during the charging and discharging process, a battery cell exhibits a rise in temperature and expands, and internal pressure of the battery cell increases. Therefore, a certain strength is required for sealing between a cover plate and a housing, in order to ensure that the battery cell is not prone to failure. Hence, how to not only improve processing efficiency of the battery cell, but also ensure safety performance of the battery cell is a problem to be urgently solved at present.

Therefore, an embodiment of the present application provides a device for producing a battery cell, including an upsetting mechanism and a moving mechanism, where a surface of the upsetting mechanism facing a crimping structure is provided with at least one protruding structure. The protruding structure is configured to press the crimping structure of the battery cell towards a direction of a central axis of the battery cell when the moving mechanism controls the upsetting mechanism to move towards the battery cell along the direction of the central axis of the battery cell, so that the crimping structure is inclined towards a direction close to the central axis of the battery cell. By means of the protruding structure disposed on the upsetting mechanism, not only can the crimping structure be compacted, but also the crimping structure is enabled to be inclined towards the direction close to the central axis of the battery cell, thereby improving compressive performance of the crimping structure, and further improving sealing effect of the crimping structure.

The technical solutions described in the embodiments of the present application are all applicable to various power consumption devices using batteries.

The power consumption devices may be vehicles, mobile phones, portable devices, laptops, ships, spacecraft, electric toys and electric tools, etc. The vehicles may be fuel-powered vehicles, gas-powered vehicles or new energy vehicles, and the new energy vehicles may be pure electric vehicles, hybrid vehicles or extended-range vehicles; the spacecraft includes airplanes, rockets, space shuttles and spaceships, etc.; the electric toys include fixed or mobile electric toys, such as game consoles, electric car toys, electric boat toys and electric airplane toys, etc.; and the electric tools include metal cutting electric tools, grinding electric tools, assembly electric tools and railway electric tools, for example, electric drills, electric grinders, electric wrenches, electric screwdrivers, electric hammers, impact drills, concrete vibrators, electric planers, and the like. The embodiments of the present application do not impose special limitations on the above power consumption devices.

For the convenience of description, the following embodiments will be described by taking the power consumption devices as vehicles as an example.

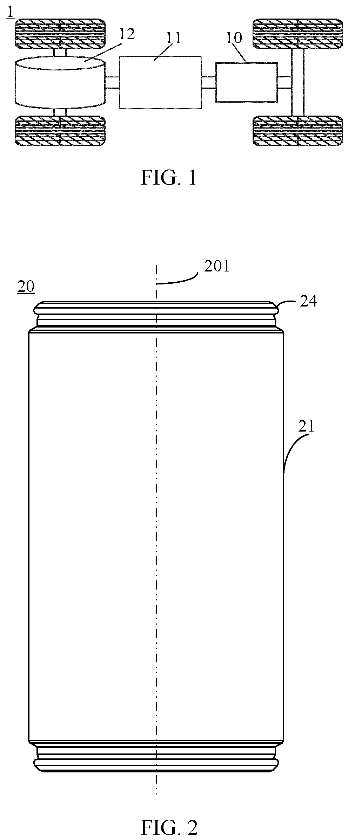

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 12, a controller 11 and a battery 10 may be disposed inside the vehicle 1, and the controller 11 is configured to control the battery 10 to supply power to the motor 12. For example, the battery 10 may be disposed at the bottom, head or tail of the vehicle 1. The battery 10 may be used for supplying power to the vehicle 1. For example, the battery 100 may serve as an operation power supply of the vehicle 1, and is used for a circuit system of the vehicle 1, for example, for a working power demand of the vehicle 1 during startup, navigation, and running. In another embodiment of the present application, the battery 10 can not only serve as an operation power supply of the vehicle 1, but also as a driving power supply of the vehicle 1, replacing or partially replacing fuel or natural gas to provide driving power for the vehicle 1.

In order to satisfy different power usage requirements, the battery may include a plurality of battery cells. The plurality of battery cells may be in series connection, parallel connection or series-parallel connection, and the series-parallel connection means the combination of series connection and parallel connection. The battery may also be referred to as a battery pack. Optionally, the plurality of battery cells may be firstly connected in series, in parallel or in series-parallel to form a battery module, and then multiple battery modules are connected in series or in parallel or in series-parallel to form the battery. That is, the plurality of battery cells may form the battery directly, or the plurality of battery cells may form a battery module first, and then battery modules form the battery.

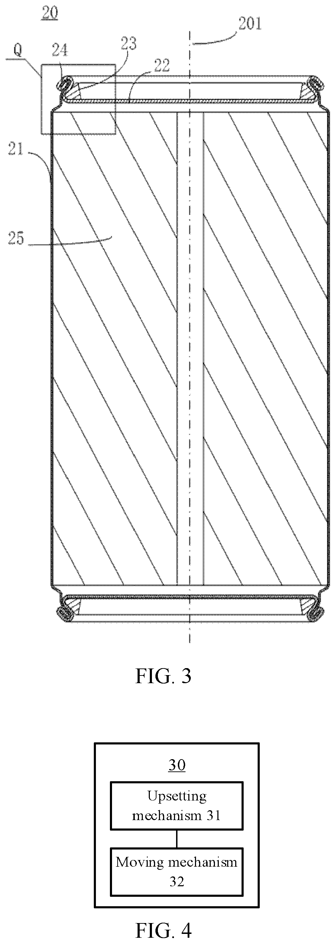

FIG. 2 shows a schematic diagram of a battery cell 20 according to an embodiment of the present application; FIG. 3 shows a schematic cross-sectional view of a battery cell 20 according to an embodiment of the present application, where FIG. 3 may be one possible schematic cross-sectional view of the battery cell 20 shown in FIG. 2, and the schematic cross-sectional view may be a schematic view of a cross-section of the battery cell 20 shown in FIG. 2 along a plane passing through a central axis 201 of the battery cell 20; and FIG. 4 shows a schematic block diagram of a device 30 for producing a battery cell 20 according to an embodiment of the present application, where the device 30 may be configured to produce the battery cell 20 as shown in FIGS. 2 and 3. Specifically, with reference to FIGS. 2 to 4, the device 30 of the embodiment of the present application may include an upsetting mechanism 31 and a moving mechanism 32. The moving mechanism 32 is configured to: control the upsetting mechanism 31 to move towards the battery cell 20 along a direction of a central axis 201 of the battery cell 20, and the battery cell 20 includes a housing 21 and a cover plate 22, and the housing 21 and the cover plate 22 are connected in a sealing manner and formed with a crimping structure 24 turned outwards; and a reinforcing member 23 is disposed at a side of the cover plate 22 away from an interior of the battery cell 20; a surface of the upsetting mechanism 31 facing the crimping structure 24 is provided with at least one protruding structure 311, and the protruding structure 311 is configured to press the crimping structure 24 towards the direction of the central axis 201 of the battery cell 20 when the moving mechanism 32 controls the upsetting mechanism 31 to move towards the battery cell 20, so that the crimping structure 24 is inclined towards a direction close to the central axis 201 of the battery cell 20.

It should be understood that in the embodiment of the present application, the upsetting mechanism 31 is connected with the moving mechanism 32 so that the moving mechanism 32 can control the upsetting mechanism 31 to move. For example, the moving mechanism 32 may be directly or indirectly connected with the upsetting mechanism 31, which is not limited in the embodiment of the present application.

In the embodiment of the present application, the housing 21 and the cover plate 22 are connected in a sealing manner and formed with the crimping structure 24 turned outwards, which means that the crimping structure 24 is located at an exterior of the battery cell 20, that is, the housing 21 and the cover plate 22 converge and turn over towards the exterior of the battery cell to form the crimping structure 24.

Therefore, in the device 30 provided in the embodiment of the present application, the protruding structure 311 included in the upsetting mechanism 31 can press the crimping structure 24 of the battery cell 20 towards the direction of the central axis 201 of the battery cell 20 when the moving mechanism 32 controls the upsetting mechanism 31 to move towards the battery cell 20 along the direction of the central axis 201 of the battery cell 20, so that the crimping structure 24 is inclined towards the direction close to the central axis 201 of the battery cell 20. By means of the protruding structure 311 disposed on the upsetting mechanism 31, not only can the crimping structure 24 be compacted, but also the crimping structure 24 is enabled to be inclined towards the direction close to the central axis 201 of the battery cell 20, thereby improving compressive performance of the crimping structure 24, and further improving sealing effect of the crimping structure 24.

Optionally, as one embodiment, the battery cell 20 in the embodiment of the present application may further include a reinforcing member 23, and the reinforcing member 23 is disposed at a side of the cover plate 22 away from an interior of the battery cell 20. Specifically, as shown in FIGS. 2 to 4, in the embodiments of the present application, the reinforcing member 23 is disposed at the side of the cover plate 22 away from the interior of the battery cell 20, which may include: the reinforcing member 23 is directly disposed on a surface of the cover plate 22 away from the interior of the battery cell 20, or the reinforcing member 23 is indirectly disposed on a surface of the cover plate 22 away from the interior of the battery cell 20 through another component. For example, another component may be disposed between the reinforcing member 23 and the cover plate 22, for example, a fixing structure may be disposed, but the embodiments of the present application are not limited thereto.

In the embodiment of the present application, the upsetting mechanism 31 is further configured to: press the crimping structure 24, so that the crimping structure 24 is inclined towards the direction close to the central axis 201 of the battery cell 20, and at least part of the reinforcing member 23 is located between an inner side of the crimping structure 24 and the cover plate 22. Specifically, the protruding structure 311 of the upsetting mechanism 31 of the embodiment of the present application presses the crimping structure 24, so that at least part of the reinforcing member 23 is located between the inner side of the crimping structure 24 and the cover plate 22, where the inner side of the crimping structure 24 refers to a side of the crimping structure 24 facing the central axis 201 of the battery cell 20. For example, under the pressing action of the protruding structure 311 of the upsetting mechanism 31, at least part of area of the reinforcing member 23 may be in contact with a surface of the crimping structure 24 facing the central axis 201 of the battery cell 20, and also in contact with an outer surface of a cover plate body portion 222.

Therefore, the device 30 provided in the embodiment of the present application presses the crimping structure 24 towards the reinforcing member 23, so that at least part of the reinforcing member 23 is accommodated between the crimping structure 24 and the cover plate 22, and as a result, when the interior of the battery cell 20 expands and pressure on the cover plate 22 is caused to increase, the reinforcing member 23 can resist at least part of the pressure, thereby reducing the pressure directly acting on the crimping structure 24, and thus increasing compressive performance of the crimping structure 24, so as to improve safety performance of the battery cell 20 while improving processing efficiency of the battery cell 20.

For example, for a cylindrical battery cell with a diameter of 64 millimeters (mm), if the reinforcing member 23 is not provided, the compressive strength of the crimping structure is usually only 0.8 Mpa to 0.9 Mpa, and compressive strength of a pressure relief mechanism set by means of indentation is usually 1.7 Mpa, which is higher than the compressive strength of the crimping structure. Therefore, when the internal pressure of the battery cell 20 exceeds an upper limit of the compressive strength of the crimping structure, the crimping structure will fail prior to the pressure relief mechanism, which further leads to the failure of the battery cell. However, the reinforcing member 23 added between the crimping structure 24 and the cover plate 22 can resist part of the pressure. When the reinforcing member 23 fails, the crimping structure 24 may fail, thereby improving compressive capability of the crimping structure 24, and enabling the pressure relief mechanism to fail prior to the crimping structure 24, and improving safety of the battery cell 20.

It should be understood that the housing 21 in the embodiment of the present application is a component for accommodating an electrode assembly 25, and the housing 21 may be in a hollow structure with an opening formed at at least one end. For example, if the housing 21 is in a hollow structure with an opening formed at one end, one cover plate 22 may be provided to cover the opening of the housing 21. Or, as shown in FIGS. 2 to 5, the housing 21 may also be in a hollow structure with openings formed at opposite ends, and then two cover plates 22 may be provided, and the two cover plates 22 respectively cover the openings at both ends of the housing 21. The embodiment of the present application mainly takes the following as an example: the housing 21 is in a hollow structure with openings formed at opposite ends, that is, the housing 21 is in a hollow structure with openings at both ends, and the battery cell 20 includes two cover plates 22, and the two cover plates 22 are respectively used to cover the openings at both ends, so that the electrode assembly 25 can be assembled into the housing 21 through any opening, which also facilitates the assembly of other components in the housing 21 to improve assembly efficiency.

Optionally, the housing 21 in the embodiment of the present application may be made of various materials, such as copper, iron, aluminum, steel, aluminum alloy, and the like. The housing 21 may be in various shapes, such as cylinder, cuboid and so on. Exemplarily, in each drawing of the embodiment of the present application, the housing 21 is in a cylindrical structure.

The cover plate 22 in the embodiment of the present application is a component that covers the opening of the housing 21 to isolate the internal environment of the battery cell 20 from the external environment. The material of the cover plate 22 may also be various, for example, copper, iron, aluminum, steel, aluminum alloy, etc. The material of the cover plate 22 and the material of the housing 21 may be the same or different.

It should be understood that the shape of the cover plate 22 may match the shape of the housing 21. For example, when the housing 21 is in a cuboid structure, the cover plate 22 may be a plate-shaped structure that is compatible with the housing 21, or it may also be in a hollow cuboid structure with an opening 213 at one end, so that a cuboid battery cell 20 is formed after the cover plate 22 and the housing 21 are covered. For another example, as shown in FIGS. 2 to 5, when the housing 21 of the embodiment of the present application is a cylinder, the cover plate 22 may also be a circular plate, or a bottom wall thereof may be in a circular groove structure, so that a cylindrical battery cell 20 is formed after the cover plate 22 and the housing 21 are covered. Below, the description mainly takes the cover plate 22 as a circular plate as an example, but embodiments of the present application are not limited thereto.

For the battery cell 20, the housing 21 and the cover plate 22 are connected in a sealing manner and formed with the crimping structure 24, and the crimping structure 24 surrounds the opening of the housing 21, that is, the crimping structure 24 is formed by surrounding the circumference of the battery cell 20. For example, for a cylindrical battery cell 20, the crimping structure 24 is generally in a ring shape.

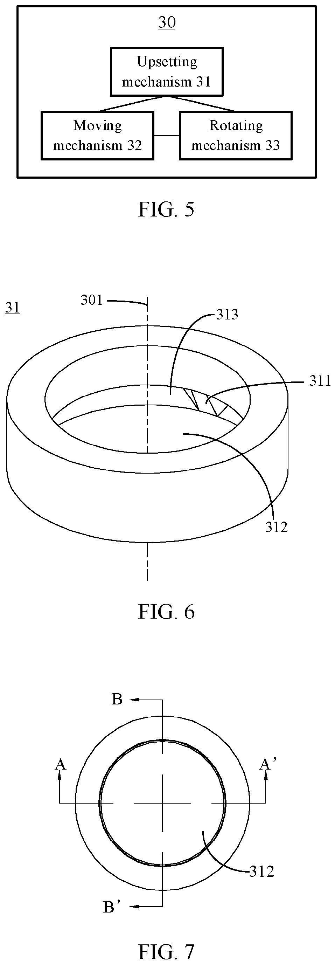

Optionally, FIG. 5 shows another schematic block diagram of a device 30 for producing a battery cell 20 according to an embodiment of the present application, where the device 30 shown in FIG. 5 may also be configured to produce the battery cell shown in FIG. 2 and FIG. 3. As shown in FIG. 5, in comparison with FIG. 4, the device 30 of the embodiment of the present application may further include: a rotating mechanism 33 configured to control the upsetting mechanism 31 to rotate about the central axis 201 of the battery cell 20. Given that the crimping structure 24 between the housing 21 and the cover plate 22 generally surrounds the battery cell 20, the upsetting mechanism 31 can be controlled to rotate about the central axis 201 of the battery cell 20 through the rotating mechanism 33, so that the protruding structure 311 of the upsetting mechanism 31 can be in contact with different areas of the crimping structure 24. For example, for a ring-shaped crimping structure 24, the protruding structure 311 can contact and press each area of an outer surface of the crimping structure 24 during the rotation of the upsetting mechanism 31, so that each area of the crimping structure 24 can be uniformly stressed, thereby generating uniform deformation, and improving processing efficiency of the crimping structure 24.

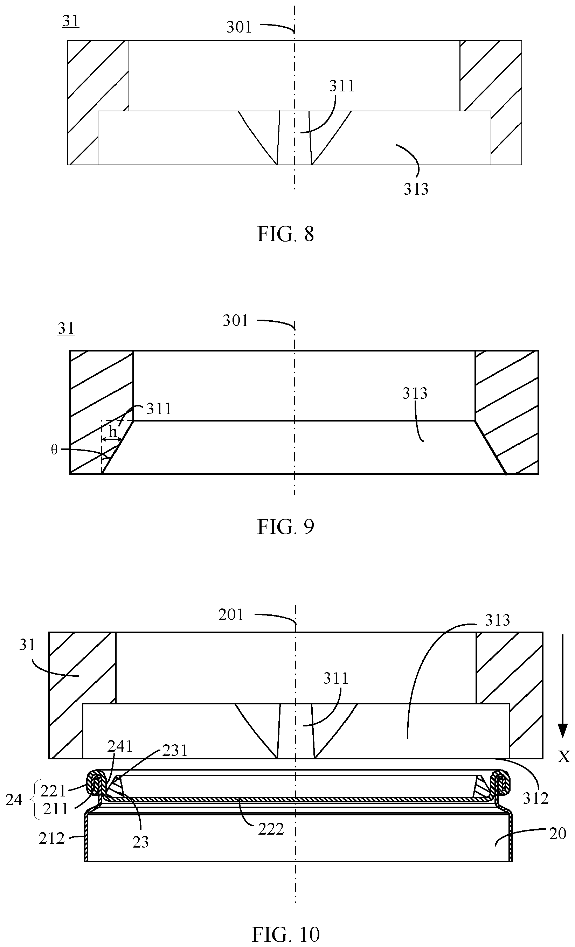

Optionally, relative positions of the upsetting mechanism 31 and the battery cell 20 in the embodiment of the present application can be set according to actual applications, and due to different settings of the relative positions of the upsetting mechanism 31 and the battery cell 20, directions of rotation and movement of the upsetting mechanism 31 can also be flexibly adjusted. The upsetting mechanism 31 of the embodiment of the present application will be described in detail below in conjunction with the accompanying drawings. FIG. 6 shows a schematic structural diagram of an upsetting mechanism 31 according to an embodiment of the present application. FIG. 7 shows a schematic top view of an upsetting mechanism 31 according to an embodiment of the present application, where the upsetting mechanism 31 shown in FIG. 7 may be the upsetting mechanism 31 shown in FIG. 6. FIG. 8 shows a schematic cross-sectional view of an upsetting mechanism 31 according to an embodiment of the present application, where the cross-sectional view may be a schematic cross-sectional view of the upsetting mechanism 31 along an A-A' direction shown in FIG. 7. FIG. 9 shows another schematic cross-sectional view of an upsetting mechanism 31 according to an embodiment of the present application, where the cross-sectional view may be a schematic cross-sectional view of the upsetting mechanism 31 along a B-B' direction shown in FIG. 7.

As shown in FIGS. 6 to 9, the upsetting mechanism 31 in the embodiments of the present application is in a hollow structure with an opening 312, and the hollow structure is used to accommodate the crimping structure 24. The hollow structure included in the upsetting mechanism 31 can be used to accommodate the crimping structure 24, that is, the hollow structure can limit the crimping structure 24 of the battery cell 20 in the interior of the upsetting mechanism 31, which limits the moving space of the crimping structure 24, so as to facilitate the fixing and processing of the crimping structure 24 through the upsetting mechanism 31.

Optionally, the shape of the hollow structure of the upsetting mechanism 31 in the embodiment of the present application may be set according to the shape of the battery cell 20. For example, as shown in FIGS. 6 to 9, the battery cell 20 is a cylinder, and an inner side surface 313 of the upsetting mechanism 31 is a cylindrical surface, that is, the upsetting mechanism 31 has a cylindrical hollow structure for accommodating the crimping structure 24 of the cylindrical battery cell 20. In addition, the shape of the upsetting mechanism 31 may also be consistent with that of the battery cell 20, that is, the upsetting mechanism 31 may be cylindrical to facilitate processing. In addition, in the case that the upsetting mechanism 31 is cylindrical, if the protruding structure 311 disposed on the inner side surface 313 of the upsetting mechanism 31 is not considered, a central axis 301 of the upsetting mechanism 31 may overlap with a central axis 301 of the hollow structure of the upsetting mechanism 31, so that the upsetting mechanism 31 is an axisymmetric figure, so as to facilitate processing.

Optionally, the shape of the reinforcing member 23 in the embodiment of the present application may also be set according to actual applications. For example, the shape of the reinforcing member 23 may be related to the shape of the crimping structure 24. By taking the cylindrical battery cell 20 as an example, the crimping structure 24 surrounds the opening of the housing 21, that is, the crimping structure 24 is a ring, then the outer contour of the reinforcing member 23 may also be circular to cooperate with the crimping structure 24. Alternatively, if the battery cell 20 is a cuboid and the crimping structure 24 surrounds the opening of the housing 21, the crimping structure 24 is a rectangular ring. Correspondingly, the outer contour of the reinforcing member 23 may also be a rectangle. For another example, the reinforcing member 23 may be ring-shaped, which is not only convenient for processing, but also can reduce the weight of the reinforcing member 23, so as to reduce the overall weight of the battery cell 20, and thus reduce the weight of the battery 10.

In the embodiments of the present application, as shown in FIGS. 6 to 9, the at least one protruding structure 311 is disposed on an inner side surface 313 of the upsetting mechanism 31, and the inner side surface 313 of the upsetting mechanism 31 is adjacent to the opening 312. As a result, the moving mechanism 32 can control the relative movement between the upsetting mechanism 31 and the battery cell 20, so that the crimping structure 24 of the battery cell 20 enters the hollow structure of the upsetting mechanism 31 from the opening 312, so as to facilitate the protruding structure 311 disposed on the inner side surface 313 of the upsetting mechanism 31 to press the crimping structure 24.

In the embodiment of the present application, as shown in FIGS. 6 to 9, a height h of the protruding structure 311 protruding from the inner side surface 313 of the upsetting mechanism 31 gradually increases from an end of the protruding structure 311 close to the opening 312 to an end away from the opening 312. As the crimping structure 24 of the battery cell 20 gradually enters the hollow structure of the upsetting mechanism 31 from the opening 312, the height h of the protruding structure 311 protruding from the inner side surface 313 of the upsetting mechanism 31 gradually increases, which can make the crimping structure 24 gradually pressed to increase the tightness of the crimping structure 24, and the crimping structure 24 gradually bent towards the central axis 201 of the battery cell 20, so that at least part of the reinforcing member 23 can be gradually accommodated and fixed between the crimping structure 24 and the cover plate 22.

Optionally, the height h of the protruding structure 311 protruding from the inner side surface 313 of the upsetting mechanism 31 in the embodiment of the present application can be set according to actual applications. For example, the height h can be set such that the inclination degree of a surface of the protruding structure 311 facing the battery cell 20 is consistent with the inclination degree of a surface of the reinforcing member 23 facing the crimping structure 24, that is, the surface of the protruding structure 311 facing the battery cell 20 is approximately parallel to the surface of the reinforcing member 23 facing the crimping structure 2430, so that the crimping structure 24 can be uniformly pressed between the protruding structure 311 and the reinforcing member 23. For another example, since the height h is related to the inclination degree of the surface of the protruding structure 311 facing the battery cell 20, a value range of an included angle θ between a surface of the protruding structure 311 facing the crimping structure 24 and the central axis 201 of the battery cell 20 can be set as [30°, 90°], so as to prevent the performance of the crimping structure 24 from being affected if the included angle θ is too small.

For example, if the inclination degree of the surface of the protruding structure 311 facing the battery cell 20 is consistent with the inclination degree of the surface of the reinforcing member 23 facing the crimping structure 24, that is, the surface of the protruding structure 311 facing the battery cell 20 is approximately parallel to the surface of the reinforcing member 23 facing the crimping structure 24, when the included angle θ is too small, an included angle between the surface of the reinforcing member 23 facing the crimping structure 24 and the central axis 201 of the battery cell 20 is also too small, and then when the battery cell 20 expands so that pressure on the reinforcing member 23 is generated, an angle for the reinforcing member 23 to turn up completely is too small, which will affect the strength of the reinforcing member 23 and increase the risk of failure of the crimping structure 24.

On the contrary, if the inclination degree of the surface of the protruding structure 311 facing the battery cell 20 is inconsistent with the inclination degree of the surface of the reinforcing member 23 facing the crimping structure 24, that is, the surface of the protruding structure 311 facing the battery cell 20 is not parallel to the surface of the reinforcing member 23 facing the crimping structure 24, when the included angle θ is too small, an included angle between the surface of the reinforcing member 523 facing the crimping structure 24 and the central axis 201 of the battery cell 20 may be relatively large, so that the included angle between the surface of the protruding structure 311 facing the battery cell 20 and the surface of the reinforcing member 23 facing the crimping structure 24 is too large, which will also cause the non-uniform deformation when the middle crimping structure 24 is pressed by the protruding structure 311, and will also affect the tightness and structural strength of the crimping structure 24.

Optionally, one protruding structure 311 may be disposed around the entire area of the inner side surface 313 of the upsetting mechanism 31, so that the rotating mechanism 33 may not be provided, and pressing of various areas of the ring-shaped crimping structure 24 can also be realized without rotating the upsetting mechanism 31. However, in a case that such surrounding arrangement is adopted, for the ring-shaped crimping structure 24, if all pressing forces in different areas of the ring-shaped crimping structure 24 are achieved to be equal, so that the crimping structure 24 achieves the effect of uniform deformation, then requirement for the precision of controlling the moving mechanism 31 is relatively high, which increases processing difficulty.

Alternatively, in contrast to the above, the at least one protruding structure 311 is disposed on a partial area of an inner side surface 313 of the upsetting mechanism 31. Specifically, in a case that the protruding structure 311 is disposed on a local area of the inner side surface 313 of the upsetting mechanism 31, in order to make all of different areas of the crimping structure 24 pressed by the protruding structure 311 to achieve the effect of uniform deformation, rotation of the upsetting mechanism 31 can be controlled by the rotating mechanism 33, so that the protruding structure 311 located in the local area can also press different areas of the ring-shaped crimping structure 24. Moreover, compared with the method of setting the protruding structure 311 around the entire area, the method of setting the protruding structure 311 in the local area combined with the rotation of the upsetting mechanism 31 is not only convenient for processing, but also can make the crimping structure 24 stressed more uniformly. The crimping structure 24 is only partially in contact with the protruding structure 311 at each moment, and the crimping structure 24 gradually deforms, and the deformation is more uniform, which can improve the processing efficiency and ensure the pressing force of the protruding structure 311 on the crimping structure 24 is not too large, and avoid deformation of the housing 21 of the battery cell 20.

Optionally, an inner side surface 313 of the upsetting mechanism 31 is provided with a plurality of uniformly distributed protruding structures 311, that is, the plurality of protruding structures 311 are uniformly distributed along the circumference of the inner side wall 313 of the upsetting mechanism 31. On the one hand, by setting the plurality of protruding structures 311, processing speed can be increased, and a pressing process of the crimping structure 24 can be accelerated. On the other hand, the plurality of protruding structures 311 are uniformly distributed, which can ensure that the crimping structure 24 is evenly stressed, and more uniformly deformed, thereby ensuring that the crimping structure 24 has a uniform structural strength.

For example, as shown in FIGS. 6 to 9, the upsetting mechanism 31 includes two oppositely disposed protruding structures 311. Given the limited size of the battery cell 20, setting up two protruding structures 311 is not only convenient for the processing of the upsetting mechanism 31, but also can accelerate the pressing process of the crimping structure 24, and thus ensure that the crimping structure 24 is evenly stressed and uniformly deformed.

Hereinafter, a process of processing the crimping structure 24 of the battery cell 20 by the device 30 of the embodiment of the present application will be described in detail in conjunction with the accompanying drawings. FIG. 10 shows a schematic partial diagram of a section in a case that a battery cell 20 is processed by an upsetting mechanism 31 according to an embodiment of the present application, where the schematic diagram of the section may be a schematic partial diagram of a section along a plane passing through the central axis 201 of the battery cell 20 in the case that the battery cell 20 is processed by the upsetting mechanism 31, and the upsetting mechanism 31 in FIG. 10 may be a schematic cross-sectional view of the upsetting mechanism 31 along an A-A' direction shown in FIG. 7.

As shown in FIG. 10, before starting to process the crimping structure 24 of the battery cell 20 by the upsetting mechanism 31, that is, when the upsetting mechanism 31 does not contact the crimping structure 24 of the battery cell 20, the crimping structure has been formed between the housing 21 and the cover plate 22. Specifically, the cover plate 22 includes a first edge portion 221 located in an edge area and a cover plate body portion 222 located in a central area, and the first edge portion 221 surrounds the cover plate body portion 22; and the housing 21 includes a second edge portion 211 and a housing body portion 212, and the second edge portion 211 is an area of the housing 21 close to the opening of the housing 21. The second edge portion 211 is wound with the first edge portion 221 to form the crimping structure 24. In comparison with other methods of sealing the housing 21 and the cover plate 22, the crimping structure 24 formed by winding is not only convenient for processing, but also improves the processing efficiency of the battery cell 20, and can ensure the tightness of the housing 21 and the cover plate 22.

Specifically, an area of the first edge portion 221 closest to the cover plate body portion 222 converges with and is connected to an area of the second edge portion 211 closest to the housing body portion 212; after the first edge portion 221 converges with the second edge portion 211 and is bent towards the exterior of the battery cell 20, winding is continued to form the wound crimping structure 24. The winding direction of the crimping structure 24 may be a counterclockwise direction as shown in FIG. 8, that is, the first edge portion 221 and the second edge portion 211 converge and then are bent and wound in a direction away from the central axis 201 of the battery cell 20. Or, in contrast, the winding direction of the winding structure 24 may also be clockwise, that is, the first edge portion 221 and the second edge portion 211 converge and then are bent and wound in a direction close to the central axis 201 of the battery cell 20, and the embodiment of the present application is not limited thereto. For ease of description, the embodiment of the present application is described by taking the counterclockwise direction shown in FIG. 5 as an example.

Optionally, the number of winding layers of the first edge portion 221 and the second edge portion 211 can be set according to actual applications. For example, if the number of winding layers of the crimping structure 24 is too large, volume of the crimping structure 24 will be larger, and weight thereof will also be larger, which not only increases space occupied by the battery cell 20, but also increases weight of the battery cell 20, and thus reduces energy density of the battery 10 as well. On the contrary, if the number of winding layers of the crimping structure 24 is too small, the crimping structure 24 may be unstable and sealing effect is poor. Therefore, the number of winding layers of the crimping structure 24 can generally be set as five or six. For example, the crimping structure 24 shown in FIG. 8 includes five layers in total, where the crimping structure 24 includes three layers of the first edge portion 221 and two layers of the second edge portion 211 to ensure the sealing effect.

As shown in FIG. 8, before starting to process the crimping structure 24 of the battery cell 20 by the upsetting mechanism 31, that is, when the upsetting mechanism 31 does not contact the crimping structure 24 of the battery cell 20, the crimping structure 24 may be in a direction approximately perpendicular to the central axis 201 of the battery cell 20, and a reinforcing member 23 is disposed at a side of the cover plate 22 away from an interior of the battery cell 20.

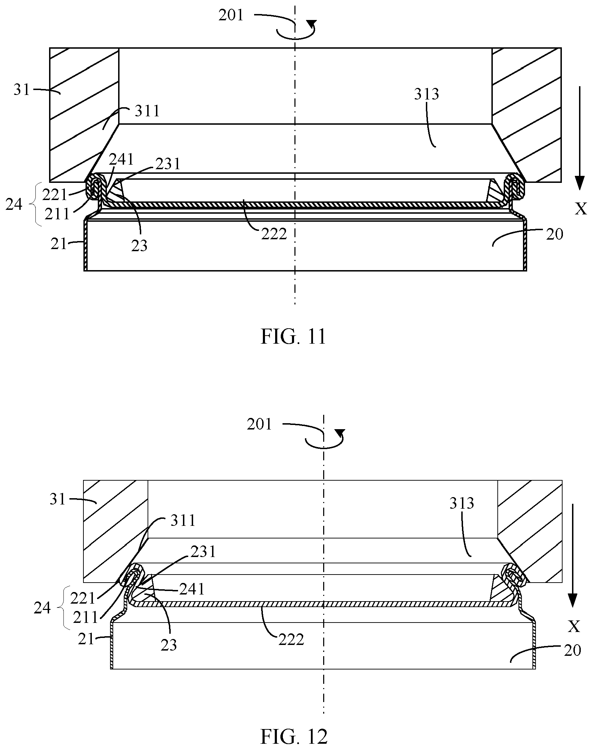

FIG. 11 shows another schematic partial diagram of a section in a case that a battery cell 20 is processed by an upsetting mechanism 31 according to an embodiment of the present application, where the schematic diagram of the section may be a schematic partial diagram of a section along a plane passing through the central axis 201 of the battery cell 20 in the case that the battery cell 20 is processed by the upsetting mechanism 31, and the upsetting mechanism 31 in FIG. 11 may be a schematic cross-sectional view of the upsetting mechanism 31 along a B-B' direction shown in FIG. 7.

As shown in FIGS. 10 and 11, the moving mechanism 32 is configured to control the upsetting mechanism 31 to gradually approach the battery cell 20 along the direction of the central axis 201 of the battery cell 20, so that the battery cell 20 enters the hollow structure from the opening 312. Specifically, the moving mechanism 32 controls the upsetting mechanism 31 to gradually approach the battery cell 20 along a direction X shown in FIG. 10, and the battery cell 20 enters the hollow structure through the opening 312 of the upsetting mechanism 31 during a process in which the battery cell 20 gradually approaches the upsetting mechanism 31, so that the protruding structure 311 disposed on the inner side surface 313 of the upsetting mechanism 31 can gradually press the crimping structure 24.

As shown in FIG. 11, a rotating mechanism 33 is configured to control the upsetting mechanism 31 to rotate about the central axis 201 of the battery cell 20. Since the embodiment of the present application is described by an example that the inner side surface 313 of the upsetting mechanism 31 is provided with two opposing protruding structures 311, the moving mechanism 32 controls the upsetting mechanism 31 to approach the battery cell 20, and the rotating mechanism 22 can control the upsetting mechanism 31 to rotate about the central axis 201 of the battery cell 20 to uniformly press the ring-shaped crimping structure 24 through the protruding structure 311 during the process of rotating and moving along the direction X, so that a surface 241 of the crimping mechanism 24 facing the reinforcing member 23 gradually approaches and contacts a surface 231 of the reinforcing member facing the crimping structure 24.

Further, the rotating mechanism 33 may be specifically configured to control the upsetting mechanism 31 to rotate about the central axis 201 of the battery cell 20 when the moving mechanism 32 controls the upsetting mechanism 31 to move towards the battery cell 20. That is, the movement and rotation of the upsetting mechanism 31 can be executed at the same time, which can accelerate processing speed, and improve processing efficiency.

Optionally, a central axis of the upsetting mechanism 31 overlaps with the central axis 201 of the battery cell 20, so that the upsetting mechanism 31 rotates about the central axis 201 of the battery cell 20, that is, rotating around the central axis 301 of the upsetting mechanism 31, so as to ensure that the surface 241 of the crimping structure 24 is evenly stressed and uniformly deformed, and improve the strength of the crimping structure 24.

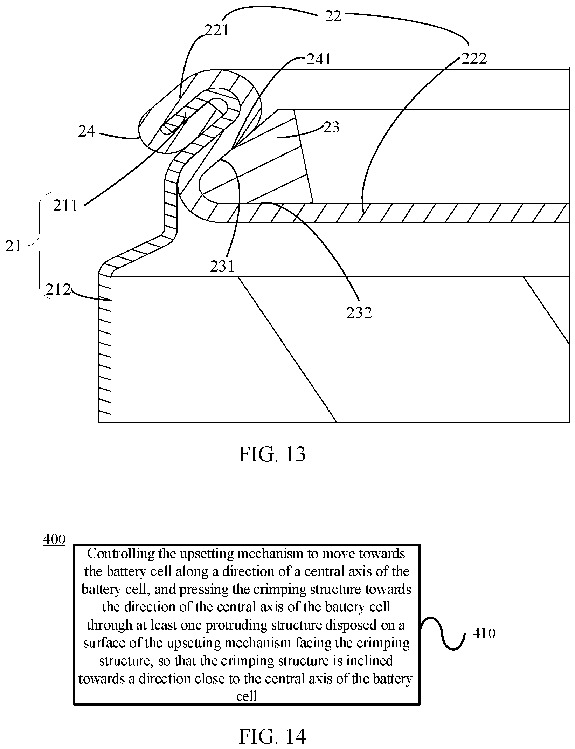

FIG. 12 shows yet another schematic partial diagram of a section in a case that a battery cell 20 is processed by an upsetting mechanism 31 according to an embodiment of the present application, where the schematic diagram of the section may be a schematic partial diagram of a section along a plane passing through the central axis 201 of the battery cell 20 in the case that the battery cell 20 is processed by the upsetting mechanism 31, and the upsetting mechanism 31 in FIG. 12 may be a schematic cross-sectional view of the upsetting mechanism 31 along a B-B' direction shown in FIG. 7. FIG. 13 shows a schematic partial cross-sectional view of a battery cell 20 produced by a device 30 according to an embodiment of the present application. For example, FIG. 13 may be an enlarged view of area Q in FIG. 3.

As shown in FIGS. 12 and 13, during the process in which the moving mechanism 32 controls the upsetting mechanism 31 to move along a direction X, the protruding structure 311 gradually presses the crimping structure 24 so that the crimping structure 24 is bent towards the direction of the central axis 201 of the battery cell 20 until the surface 241 of the crimping structure 24 is in contact with the surface 231 of the reinforcing member 23, so as to complete the processing and fixing of the crimping structure 24 and the reinforcing member 23. In this way, the upsetting mechanism 31 can not only compact the crimping structure 24, but also enable the surface 241 of the crimping structure 24 to be inclined rather than to be parallel relative to the central axis 201 of the battery cell 20.

In this way, when the pressure in the interior of the battery cell 20 gradually increases, the cover plate 22 will be deformed under the action of the internal pressure, for example, the cover plate body portion 222 of the cover plate 22 will arch towards the exterior of the battery cell 20. The reinforcing member 23 provided will also change, that is, the reinforcing member 23 will be turned towards the exterior of the battery cell 20, and the reinforcing member 23 can offset most of the internal pressure, reduce the deformation of the cover plate 22, that is, reducing the arching of the cover plate 22. In addition, when the reinforcing member 23 is turned outwards, the reinforcing member 23 will exert an acting force on the crimping structure 24, and this acting force enables a frictional force between layers of the crimping structure 24 to increase, that is, a frictional force between the first edge structure 221 and the second edge structure 221 increases, which can prevent failure caused by misalignment between the housing 21 and the cover plate 22, and can increase the airtightness between the housing 21 and the cover plate 22.

Moreover, the internal pressure of the battery cell 20 will first act on the reinforcing member 23 instead of directly acting on the crimping structure 24. Specifically, for the case that the reinforcing member 23 is provided, during the process in which the internal pressure of the battery cell 20 gradually increases, only when the reinforcing member 23 is completely turned up under the action of internal pressure, that is, the surface 231 of the reinforcing member 23 is inclined to be turned outwards until the surface 231 of the reinforcing member 23 is parallel to the central axis 201 of the battery cell 20, may the reinforcing member 23 fail. Correspondingly, the crimping structure 23 will also fail due to the direct internal pressure. Therefore, whether the crimping structure 23 of the embodiment of the present application fails is related to compressive strength of the reinforcing member 23, where the compressive strength of the reinforcing member 23 refers to a minimum internal pressure required when the reinforcing member 23 is completely turned up. In the case that the reinforcing member 23 is not provided, whether the crimping structure 23 fails is only related to compressive strength of the crimping structure 23 itself, where the compressive strength of the crimping structure 23 itself refers to a minimum internal pressure required at the time of failure of the crimping structure 23 due to deformation when the internal pressure of the battery cell 20 directly acts on the crimping structure 23. Then, when the compressive strength of the crimping structure 23 itself is the same, in comparison with the case that the reinforcing member 23 is not provided, whether the crimping structure 23 fails in the embodiment of the present application is related to the strength of the reinforcing member 23, and the compressive strength of the reinforcing member 23 can be increased to prevent the crimping structure 23 from failing.

Optionally, after the upsetting mechanism 31 completes the processing of the crimping structure 24, the moving mechanism 32 is further configured to: control the upsetting mechanism 31 to gradually move away from the crimping structure 24 along the direction of the central axis 201 of the battery cell 20, that is, moving the upsetting mechanism 31 away from the crimping structure along a direction opposite to the direction X to finish the processing of the crimping structure 24 by the upsetting mechanism 31.

The device 30 for producing the battery cell 20 according to the embodiments of the present application is described in detail above with reference to FIGS. 1 to 13. Below, a method 400 for producing a battery cell 20 according to an embodiment of the present application is described with reference to FIG. 14. FIG. 14 shows a schematic flowchart of a method 400 for producing a battery cell 20 according to an embodiment of the present application. The method 400 may be performed by the foregoing device 30 and the method 400 may be used to produce the foregoing battery cell 20. Specifically, the battery cell 20 includes a housing 21 and a cover plate 22, and the housing 21 and the cover plate 22 are connected in a sealing manner and formed with a crimping structure 24 turned outwards. As shown in FIG. 14, the method 400 includes: S410, controlling the upsetting mechanism 31 to move towards the battery cell 20 along a direction of a central axis 201 of the battery cell 20, and pressing the crimping structure 24 towards the direction of the central axis 201 of the battery cell 20 through at least one protruding structure 311 disposed on a surface of the upsetting mechanism 31 facing the crimping structure 24, so that the crimping structure 24 is inclined towards a direction close to the central axis 201 of the battery cell 20.

The battery cell 20 further includes a reinforcing member 23, and the reinforcing member 23 is disposed on a side of the cover plate 22 away from an interior of the battery cell 20. The pressing the crimping structure 24 towards the direction of the central axis 201 of the battery cell 20 through at least one protruding structure 311 disposed on a surface of the upsetting mechanism 31 facing the crimping structure 24, so that the crimping structure 24 is inclined towards a direction close to the central axis 201 of the battery cell 20 includes: pressing the crimping structure 24 towards the direction of the central axis 201 of the battery cell 20 through the at least one protruding structure 311 disposed on the surface of the upsetting mechanism 31 facing the crimping structure 24, so that the crimping structure 24 is inclined towards the direction close to the central axis 201 of the battery cell 20, and at least part of the reinforcing member 23 is located between an inner side of the crimping structure 24 and the cover plate 22.

In some embodiments, the method 400 further includes: controlling the upsetting mechanism 31 to rotate about the central axis 201 of the battery cell 20.

In some embodiments, a central axis 301 of the upsetting mechanism 31 overlaps with the central axis 201 of the battery cell 20.

In some embodiments, the controlling the upsetting mechanism 31 to rotate about the central axis 201 of the battery cell 20 includes: controlling the upsetting mechanism 31 to rotate about the central axis 201 of the battery cell 20 at the time of controlling the upsetting mechanism 31 to move towards the battery cell 20.

In some embodiments, the upsetting mechanism 31 is in a hollow structure with an opening 312, and the hollow structure is used to accommodate the crimping structure 24.

In some embodiments, the controlling the upsetting mechanism 31 to move towards the battery cell 20 along a direction of a central axis 201 of the battery cell 20 includes: controlling the upsetting mechanism 31 to gradually approach the battery cell 20 along the direction of the central axis 201 of the battery cell 20, so that the battery cell 20 enters the hollow structure from the opening 312.

In some embodiments, the battery cell 20 is a cylinder, and the hollow structure is a cylinder.

It should be understood that the device 30 in the embodiment of the present application can be used to perform the method 400 in the embodiment of the present application, and the method 400 includes the corresponding process of producing the battery cell 20 by the device 30, which will not be repeatedly described here for brevity.

While the present application has been described with reference to preferred embodiments, various improvements may be made and equivalents may be used to substitute parts therein without departing from the scope of the present application. In particular, as long as there is no structural conflict, technical features mentioned in various embodiments can be combined in any manner. The present application is not limited to the specific embodiments disclosed herein, but includes all technical solutions falling within the scope of the claims.

## Claims

1. A device for producing a battery cell, comprising: an upsetting mechanism (31) and a moving mechanism (32), wherein
the moving mechanism (32) is configured to: control the upsetting mechanism (31) to move towards the battery cell (20) along a direction of a central axis (201) of the battery cell (20), and the battery cell (20) comprises a housing (21) and a cover plate (22), and the housing (21) and the cover plate (22) are connected in a sealing manner and formed with a crimping structure (24) turned outwards; and
a surface of the upsetting mechanism (31) facing the crimping structure (24) is provided with at least one protruding structure (311), and the protruding structure (311) is configured to press the crimping structure (24) towards the direction of the central axis (201) of the battery cell (20) when the moving mechanism (32) controls the upsetting mechanism (31) to move towards the battery cell (20), so that the crimping structure (24) is inclined towards a direction close to the central axis (201) of the battery cell (20).

2. The device according to claim 1, wherein the battery cell (20) further comprises a reinforcing member (23), and the reinforcing member (23) is disposed at a side of the cover plate (22) away from an interior of the battery cell (20); and the upsetting mechanism (31) is configured to press the crimping structure (24), so that the crimping structure (24) is inclined towards the direction close to the central axis (201) of the battery cell (20), and at least part of the reinforcing member (23) is located between an inner side of the crimping structure (24) and the cover plate (22).

3. The device according to claim 1 or 2, wherein the device further comprises:
a rotating mechanism (33) configured to control the upsetting mechanism (31) to rotate about the central axis (201) of the battery cell (20).

4. The device according to claim 3, wherein a central axis (301) of the upsetting mechanism (31) overlaps with the central axis (201) of the battery cell (20).

5. The device according to claim 4, wherein the rotating mechanism (33) is configured to control the upsetting mechanism (31) to rotate about the central axis (201) of the battery cell (20) when the moving mechanism (32) controls the upsetting mechanism (31) to move towards the battery cell (20).

6. The device according to any one of claims 1 to 5, wherein the upsetting mechanism (31) is in a hollow structure with an opening (312), and the hollow structure is used to accommodate the crimping structure (24).

7. The device according to claim 6, wherein the at least one protruding structure (311) is disposed on an inner side surface (313) of the upsetting mechanism (31), and the inner side surface (313) of the upsetting mechanism (31) is adjacent to the opening (312).

8. The device according to claim 7, wherein the moving mechanism (32) is configured to:
control the upsetting mechanism (31) to gradually approach the battery cell (20) along the direction of the central axis (201) of the battery cell (20), so that the battery cell (20) enters the hollow structure from the opening (312).

9. The device according to claim 8, wherein a height of the protruding structure (311) protruding from the inner side surface (313) of the upsetting mechanism (31) gradually increases from an end of the protruding structure (311) close to the opening (312) to an end away from the opening (312).

10. The device according to claim 9, wherein a value range of an included angle between a surface of the protruding structure (311) facing the crimping structure (24) and the central axis (201) of the battery cell (20) is [30°, 90°].

11. The device according to any one of claims 5 to 10, wherein the at least one protruding structure (311) is disposed on a partial area of an inner side surface (313) of the upsetting mechanism (31).

12. The device according to any one of claims 5 to 11, wherein an inner side surface (313) of the upsetting mechanism (31) is provided with a plurality of uniformly distributed protruding structures (311).

13. The device according to claim 12, wherein the upsetting mechanism (31) comprises two oppositely disposed protruding structures (311).

14. The device according to any one of claims 4 to 13, wherein the battery cell (20) is a cylinder, and an inner side surface (313) of the upsetting mechanism (31) is a cylindrical surface.

15. A method for producing a battery cell, wherein the battery cell (20) comprises a housing (21) and a cover plate (22), and the housing (21) and the cover plate (22) are connected in a sealing manner and formed with a crimping structure (24) turned outwards, and the method comprises:
controlling the upsetting mechanism (31) to move towards the battery cell (20) along a direction of a central axis (201) of the battery cell (20), and pressing the crimping structure (24) towards the direction of the central axis (201) of the battery cell (20) through at least one protruding structure (311) disposed on a surface of the upsetting mechanism (31) facing the crimping structure (24), so that the crimping structure (24) is inclined towards a direction close to the central axis (201) of the battery cell (20).

16. The method according to claim 15, wherein the battery cell (20) further comprises a reinforcing member (23), and the reinforcing member (23) is disposed at a side of the cover plate (22) away from an interior of the battery cell (20); and
the pressing the crimping structure (24) towards the direction of the central axis (201) of the battery cell (20) through at least one protruding structure (311) disposed on a surface of the upsetting mechanism (31) facing the crimping structure (24), so that the crimping structure (24) is inclined towards a direction close to the central axis (201) of the battery cell (20) comprises:
pressing the crimping structure (24) towards the direction of the central axis (201) of the battery cell (20) through the at least one protruding structure (311) disposed on the surface of the upsetting mechanism (31) facing the crimping structure (24), so that the crimping structure (24) is inclined towards the direction close to the central axis (201) of the battery cell (20), and at least part of the reinforcing member (23) is located between an inner side of the crimping structure (24) and the cover plate (22).

17. The method according to claim 15 or 16, wherein the method further comprises:
controlling the upsetting mechanism (31) to rotate about the central axis (201) of the battery cell (20).

18. The method according to claim 17, wherein a central axis (301) of the upsetting mechanism (31) overlaps with the central axis (201) of the battery cell (20).

19. The method according to claim 18, wherein the controlling the upsetting mechanism (31) to rotate about the central axis (201) of the battery cell (20) comprises:
controlling the upsetting mechanism (31) to rotate about the central axis (201) of the battery cell (20) at the time of controlling the upsetting mechanism (31) to move towards the battery cell (20).

20. The method according to any one of claims 15 to 19, wherein the upsetting mechanism (31) is in a hollow structure with an opening (312), and the hollow structure is used to accommodate the crimping structure (24).

21. The method according to claim 20, wherein the controlling the upsetting mechanism (31) to move towards the battery cell (20) along a direction of a central axis (201) of the battery cell (20) comprises:
controlling the upsetting mechanism (31) to gradually approach the battery cell (20) along the direction of the central axis (201) of the battery cell (20), so that the battery cell (20) enters the hollow structure from the opening (312).

22. The method according to claim 20 or 21, wherein the battery cell (20) is a cylinder, and the hollow structure is a cylinder.
